# EUROPEAN PATENT SPECIFICATION

(11) **EP 1 580 145 B1**
(45) Date of publication and mention of the grant of the patent: **18.04.2007**
(21) Application number: 05425069.1
(22) Date of filing: 11.02.2005
(51) Int. Cl.: B65D 81/34, A47J 39/00

(54) **Hot box for pizzas to take away, suited to be connected to the car cigarette lighter socket and/or battery-operated**
Heizbehälter zum Mitnehmen von Pizzen, geeignet zur Verbindung mit dem Zigarettenanzünder eines Fahrzeugs und/oder zum Betrieb mit einer Batterie
Boîte chauffante pour pizzas à emporter, adaptée à être connectée sur un soquet d'allume cigarette et/ou à fonctionner sur batterie

(30) Priority: 20.02.2004 IT pd20040050
(43) Date of publication of application: 28.09.2005
(73) Proprietor: Martini, Carlo, 35044 Montagnana (PD) (IT)
(72) Inventor: Martini, Carlo, 35044 Montagnana (PD) (IT)
(74) Representative: Vinci, Marcello

(56) References cited:
- US-A- 3 751 629
- US-A- 3 924 100
- US-A- 4 933 534
- US-B1- 6 297 481

## Description

The present patents concerns hot boxes and in particular it concerns hot boxes for transporting food.

Hot boxes for transporting food are known, which are constituted by a container made of heat insulating material. Said known hot boxes limit heat dispersion towards the outside.

However, said hot boxes allow the food temperature to be kept constant only for a limited period.

US 3 924 100 relates to a mobile cart for transporting prepared meals, especially in hospitals, nursing homes and other institutions. Said mobile cart includes food serving trays, each tray is provided with a supporting surface for food containers, such as dishes, bowls, etc., and a localized heat transfer devices suitable to heat only the portions of said surface, whereas a substantial portion of said surface is electrically and thermally insulated. Said mobile cart also includes a self-contained electrical energy source carried and movable with the cart.

US 6 297 481 relates to a food warmer comprising compartments having food shelves and infrared energy generating devices connected to an external electrical power source.

US 3 751 629 relates to a device for heating general surface e.g. package suited to heat substances contained therein. Said device includes a thin voltage heating film having a resistive electrical path between terminals connected with a external electrical source.

The trays as claimed in document US 3 924 100 are intended to support food containers, such as dishes, bowls, etc, containing meals to be maintained at suitable temperature.

As a matter of facts, document US 3 751 629 relates to a device suited to heat any kind of substance.

The problem of transporting food while keeping its temperature constant, independently of the external temperature, for long or short lapses of time, is particularly felt for the transport of pizzas to take away, even in the case of home delivery.

At present take-away pizzas are placed inside cardboard containers or boxes that allow them to be transported limiting heat dispersion, that is, preventing the pizza contained therein from cooling.

Said cardboard boxes are provided with holes, made during the cutting of the cardboard, that make it possible to assemble the box itself.

The heat of the pizza being transported passes through the carton sides, and is also let out through said holes and through the slits in the carton, so that the temperature of the pizza drops rapidly.

On the other hand, the humidity of the pizza that has just been taken out of the oven is mainly held inside the carton, so that when the pizza reaches its destination it is rather chewy and has lost most of its organoleptic characteristics.

In order to overcome all the drawbacks mentioned above, a new hot box as defined by claim 1 has been designed and implemented, which can be connected to the car cigarette lighter socket and/or can be battery-operated.

The aim of the new hot box is to heat and/or keep warm the pizzas contained therein.

Another aim of the new hot box is to heat each one of the pizzas contained therein.

These and other direct and complementary aims are achieved through the implementation of the new hot box for pizzas to take away, which is suited to be connected to the car cigarette lighter socket and/or can be battery-operated, and comprises heat-insulated sides, with front door, is internally divided with partitions, each one of which can hold a tray whose size is suited to contain a pizza, said tray being equipped on its bottom with one or more electric resistances electrically connected to two contacts arranged on two opposite vertical sides of the tray.

The inside of the hot box is provided, in correspondence with each partition, with complementary electric contacts for the various trays, which are electrically connected to a battery housed on the top or on the bottom of the hot box.

A thermostat that can be reached and adjusted from the outside and is connected to the contacts of the partitions makes it possible to adjust the temperature to be kept constant inside the hot box.

Apposite indicators positioned outside the hot box indicate the battery charge level and what trays are being heated.

A plug electrically connected to the battery inside the hot box allows the battery to be recharged or electric power to be supplied through the car cigarette lighter socket or another source.

The characteristics of the new hot box for pizzas to take away, suited to be connected to the car cigarette lighter socket and/or battery-operated, will be highlighted in greater detail in the following description, with reference to the enclosed drawings, which have been attached as a non-restrictive example.

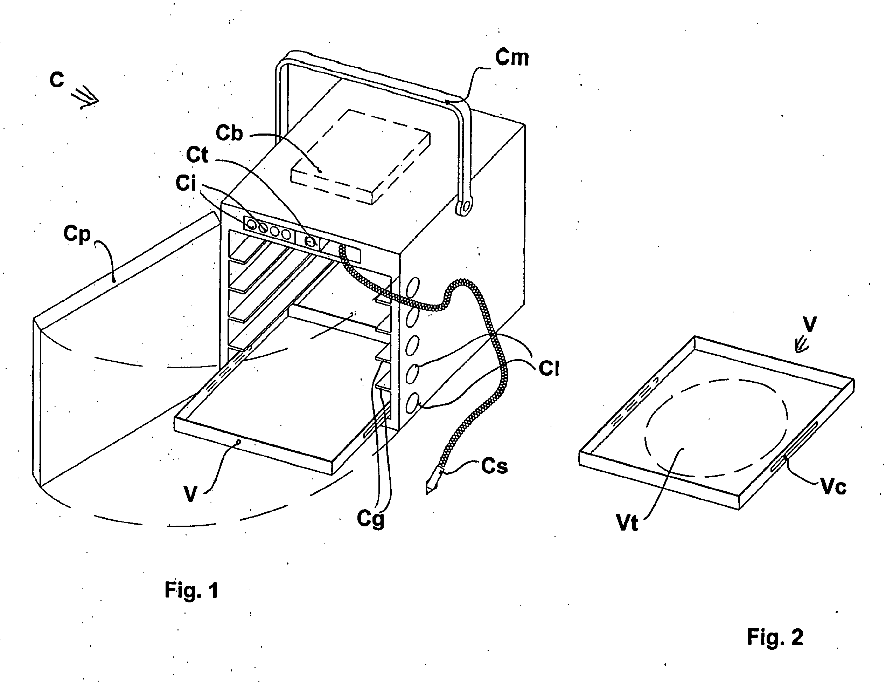

Figure 1 shows the new hot box (C) while open, and Figure 2 shows a tray (V).

The new hot box (C) is made up of heat-insulated sides, is provided with a front access door (Cp) and with a handle (Cm) to facilitate transport.

The inside of said hot box (C) is divided into compartments with partitions or is provided with lateral guides (Cg) suited to obtain compartments for several overlapping trays (V).

The size of each tray (V) is such as to contain a pizza and has raised edges.

Each tray (V) is preferably made of metal or of a heat conductive material suitable for contact with food.

In particular, each tray (V) incorporates in its bottom one or more electric resistances (Vt) electrically connected to two contacts (Vc) positioned on two opposite vertical sides of the tray (V) itself.

On each partition or compartment of the hot box (C) there are complementary electric contacts for the various trays (V), electrically connected to a battery (Cb) housed on the top or on the bottom of the hot box (C).

The hot box (C), preferably on the front side of the door (Cp), is provided with indicators (Ci) of the charge level of the battery (Cb), as well as with a thermostat (Ct) to adjust the temperature and/or the electric power supplied to the contacts of the trays (V).

The hot box (C) is also equipped with a cable with plug (Cs) suited to allow the hot box (C) to be connected to a power source or outlet, for example to the car cigarette lighter socket, or to a domestic electric outlet, or to an auxiliary battery.

It is also possible to provide the hot box (C), laterally or frontally, that is, on the door (Cp) or on one side, with luminous indicators (Cl) suited to indicate what compartments of the hot box (C) are occupied by trays (V), thus eliminating the need to open the hot box (C) itself.

Therefore, with reference to the above description and the enclosed drawings, the following claims are put forth.

## Claims

1. Hot box (C) for pizzas to take away **characterized in that** it comprises:
• at least one handle (Cm) or other device to facilitate transport and manhandle;
• at least one container with heat insulated sides and internally divided into compartments with partitions and/or provided with lateral guides (Cg) for several overlapping trays (V);
• at least one of said trays (V), each tray (V), whose size is suited to hold a pizza in horizontal position, incorporates in its bottom one or more electric resistances electrically connected to the electric contacts (Vc) arranged on two opposite vertical sides of the tray (V), and wherein the inside of the hot box (C) is provided, in correspondence with each compartment, with complementary electric contacts for the various trays (V);
• at least one battery (Cb) and/or an outlet (Cs) housed in said hot box (C) connected to said complementary electric contacts internal to the hot box (C).

2. Hot box (C) for pizzas to take away according to claim 1, **characterized in that** it is provided with one or more thermostats, accessible and adjustable from the outside and connected to the contacts of the partitions, in such a way as to allow the temperature inside the hot box and/or the temperature of the single trays (V) to be adjusted.

3. Hot box (C) for pizzas to take away according to claims 1, 2, **characterized in that** it is provided with indicators (Ci) suited to indicate the charge level of the battery (Cb).

4. Hot box (C) for pizzas to take away, according to claims 1, 2, 3, **characterized in that** it is provided with indicators (Cl) suited to indicate what trays (V) are being heated.

5. Hot box (C) for pizzas to take away according to claims 1, 2, 3, 4, **characterized in that** it is provided with a plug (Cs) electrically connected to the battery (Cb) inside the hot box and suited to be connected to the car cigarette lighter socket or to another source, in such a way as to allow said battery (Cb) of the hot box (C) itself to be recharged.

## Patentansprüche

1. Ein Heizbehälter zum Mitnehmen von Pizzen, **dadurch gekennzeichnet, dass** er folgendes umfasst:
mindestens einen Handgriff (Cm) oder eine andere Vorrichtung, um den Transport und die manuelle Handhabung zu erleichtern;
mindestens einen Behälter mit wärmeisolierten Seiten, der innen in Fächer mit Trennwänden unterteilt ist und/oder mit seitlichen Führungen (Cg) für mehrere sich überlagernde Tabletts (V) bereitgestellt wird;
wobei mindestens eines der Tabletts (V), und zwar jedes Tablett (V), dessen Größe geeignet ist, um eine Pizza in einer horizontalen Lage zu halten, in seiner Unterseite einen oder mehrere elektrische Widerstände einschließt, die elektrisch mit den elektrischen Anschlüssen (Vc) verbunden sind, die an zwei gegenüberliegenden senkrechten Seiten des Tabletts (V) angeordnet sind, und worin das Innere des Heizbehälters (C) in Entsprechung mit jedem Fach mit komplementären elektrischen Anschlüssen für die verschiedenen Tabletts (V) bereitgestellt wird;
mindestens eine Batterie (Cb) und/oder ein Ausgang (Cs), die im Heizbehälter (C) untergebracht sind und die mit den komplementären elektrischen Anschlüssen im Inneren des Heizbehälters (C) verbunden werden.

2. Heizbehälter (C) zum Mitnehmen von Pizzen nach Anspruch 1, **dadurch gekennzeichnet, dass** er mit einem oder mehreren Thermostaten bereitgestellt wird, die von Außen zugänglich und einstellbar sind und derart mit den Anschlüssen der Trennwände verbunden sind, dass erlaubt wird, die Temperatur innerhalb des Heizbehälters und/oder die Temperatur der einzelnen Tabletts (V) einzustellen.

3. Heizbehälter (C) zum Mitnehmen von Pizzen nach den Ansprüchen 1, 2, **dadurch gekennzeichnet, dass** er mit Anzeigemitteln (Ci) bereitgestellt ist, die geeignet sind, um den Ladepegel der Batterie (Cb) anzuzeigen.

4. Heizbehälter (C) zum Mitnehmen von Pizzen nach den Ansprüchen 1, 2, 3, **dadurch gekennzeichnet, dass** er mit Anzeigemitteln (Ci) bereitgestellt ist, die geeignet sind, um anzuzeigen, welche Tabletts (V) geheizt werden.

5. Heizbehälter (C) zum Mitnehmen von Pizzen nach den Ansprüchen 1, 2, 3, 4, **dadurch gekennzeichnet, dass** er mit einem Stecker (Cs) bereitgestellt wird, der elektrisch mit der Batterie (Cb) innerhalb des Heizbehälters verbunden ist und geeignet ist, so mit der Fahrzeug-Zigarettenanzünderbuchse oder einer anderen Quelle verbunden zu werden, dass der Batterie (Cb) des Heizbehälters (C) selbst die Wiederaufladung erlaubt wird.

## Revendications

1. Boîte chauffante (C) pour pizzas à emporter, **caractérisée en ce qu'**elle comporte :
• au moins une poignée (Cm) ou tout autre dispositif pour faciliter le transport et la manipulation ;
• au moins un récipient avec des côtés isolés à l'égard de la chaleur et divisé intérieurement en compartiments au moyen de cloisons et/ou équipée de guides latéraux (Cg) pour plusieurs plateaux de recouvrement (V) ;
• au moins un desdits plateaux (V), chaque plateau (V), dont la taille est adaptée à contenir une pizza en position horizontale, incorpore, au niveau de son fond, une ou plusieurs résistances électriques reliées électriquement à des contacts électriques (Vc) disposés sur deux côtés verticaux opposés du plateau (V), et l'intérieur de la boîte chauffante (C) est équipé, en correspondance en chaque compartiment, de contacts électriques complémentaires pour les différents plateaux (V) ;
• au moins une batterie (Cb) et/ou une sortie (Cs) logée dans ladite boîte chauffante (C), reliées auxdits contacts électriques complémentaires internes à la boîte chauffante (C).

2. Boîte chauffante (C) pour pizzas à emporter, selon la revendication 1, **caractérisée en ce qu'**elle est équipée d'un ou plusieurs thermostats, accessibles et réglables depuis l'extérieur et reliés aux contact des cloisons, de manière à permettre à la température à l'intérieur de la boîte chauffante et/ou à la température du plateau unique (V) d'être réglée.

3. Boîte chauffante (C) pour pizzas à emporter selon les revendications 1 ou 2, **caractérisée en ce qu'**elle est équipée d'indicateurs (Ci) propres à indiquer le niveau de charge de la batterie (Cb).

4. Boîte chauffante (C) pour pizzas à emporter, selon l'une des revendications 1, 2, 3, **caractérisée en ce qu'**elle est équipée d'indicateurs (Cl) propres à indiquer quels plateaux (V) sont chauffés.

5. Boîte chauffante (C) pour pizzas à emporter selon l'une des revendications 1, 2, 3, 4, **caractérisée en ce qu'**elle est équipée d'une prise (Cs) reliée électriquement à la batterie (Cb) à l'intérieur de la boîte chauffante et propre à être reliée à la prise d'un allume cigare de voiture ou à une autre source, de façon à permettre à ladite batterie (Cb) de la boîte chauffante (C) elle-même d'être rechargée.
